# EUROPÄISCHE PATENTSCHRIFT

(11) **EP 2 138 873 B1**
(45) Veröffentlichungstag und Bekanntmachung des Hinweises auf die Patenterteilung: **01.04.2020**
(21) Anmeldenummer: 09172658.8
(22) Anmeldetag: 11.04.2007
(51) Int. Cl.: G02B 6/00

(54) **Leuchte mit wenigstens einer lichtdurchlässigen Abdeckung**
Lamp with at least one translucent cover
Eclairage doté d'au moins une couverture transparente

(30) Priorität: 13.04.2006 DE 102006017517; 19.09.2006 DE 202006014352 U
(43) Veröffentlichungstag der Anmeldung: 30.12.2009
(62) Teilanmeldung aus: 07105970.3
(73) Patentinhaber: Zumtobel Lighting GmbH, 6850 Dornbirn (AT)
(72) Erfinder: Rüf, Wolfgang, 6850, Dornbirn (AT)
(74) Vertreter: Thun, Clemens

(56) Entgegenhaltungen:
- WO-A-01/73733
- WO-A-02/16826
- US-A- 4 435 743
- US-A- 5 018 290
- US-A- 5 797 673
- US-A- 5 966 069
- US-B2- 7 515 223

## Beschreibung

Eine Leuchte kann nicht nur dem Zweck dienen, einen Raum zu beleuchten, um ihn mit einer für Menschen erforderlichen Lichtstärke zu erhellen, sondern sie kann auch dazu dienen, einen Raum für einen Notfall autark und/oder nur so stark zu erhellen, dass ein Verlassen bzw. eine Flucht möglich ist, und/oder sie kann auch dazu dienen, lediglich einen Hinweis, z. B. eine Fluchtwegrichtung oder einen Richtungshinweis oder eine Information, z. B. im Straßenverkehr, erkennbar werden zu lassen. Für die letzten Verwendungszwecke werden in der Praxis die Bezeichnungen Sicherheitsleuchte, z. B. Notleuchte und Fluchtwegleuchte oder Hinweisleuchte benutzt.

Insbesondere eine Hinweisleuchte ist nicht nur für Wohn- oder Arbeitsräume von Menschen geeignet, sondern auch zur Aufstellung im Freien, z. B. als Hinweisschild bzw. Verkehrsschild, wobei sie insbesondere den Zweck erfüllt, gesehen zu werden. Sie kann aber auch ihren Umgebungsraum erhellen.

Eine vorliegende Leuchte kann auch nur in einer Richtung oder in zwei einander entgegengesetzten Richtungen wirksam sein. Dies ist z. B. dann gefordert, wenn eine Hinweis- oder Notleuchte am Ende eines Raumes oder Ganges positioniert werden soll oder im mittleren Bereich des Raumes oder Ganges positioniert werden soll, und einseitig oder zweiseitig wenigstens notdürftig beleuchten oder von einer oder beiden Seiten erkennbar sein soll.

An eine Leuchte der vorliegenden Art sind auch besondere konstruktive Anforderungen gestellt, nämlich sie soll zum einen eine schmale und seitlich großflächige Konstruktion haben und zum anderen gewährleisten, dass besondere elektrische Funktions- und Betriebsgeräte in der Leuchte angeordnet werden können und dabei handhabungsfreundlich zugänglich sein sollen.

Eine bekannte Leuchte dieser Art ist beispielsweise in der US 4,435,743 A beschrieben. Diese zeigt ein relativ schmales Hinweisschild, welches die Beleuchtung zweier planer Hinweisbereiche mittels einer Reihe von Glühbirnen, deren Licht über die Hinweisbereiche mit einem Lichtleiterelement verteilt wird, realisiert. Zudem ist eine Sekundärlichtquelle aus mehreren Glühbirnen, zur Beleuchtung eines Bereichs unterhalb der Leuchte, hinter einer verklebten Linse innerhalb der Leuchte angeordnet, sodass eine Anpassung und Wartung dieser Lichtquelle nur schwer möglich ist.

Der Erfindung liegt deshalb die Aufgabe zugrunde, bei einer Leuchte der vorliegenden Art die Zugänglichkeit, insbesondere zum Innenraum zwischen der Scheibe und dem Basisträger, zu verbessern sowie eine raumgünstige Konstruktion zu gewährleisten.

Diese Aufgabe wird durch die Merkmale des Anspruchs 1 gelöst. Vorteilhafte Weiterbildungen der Erfindung sind in den Unteransprüchen beschrieben.

Die vorteilhaft gestltete Leuchte lässt sich nicht nur in einerseits schmaler und andererseits verhältnismäßig großer Konstruktion realisieren, sondern sie lässt sich auch mit einem Basisträger realisieren, der ebenfalls seitlich großflächig konstruierbar ist und eine raumgünstige Anordnung an ihm von die Funktion der Leuchte gewährleistenden elektrischen Bauteilen ermöglicht. Dabei weist die Leuchte eine Scheibe aus lichtdurchlässigem Material mit einer breitseitigen Lichtabstrahlfläche und einer Lichtquelle auf, mit der Licht in die Scheibe einkoppelbar und breitseitig abstrahlbar ist. Durch einen auf der der Abstrahlfläche gegenüberliegenden Seite der Scheibe angeordneten Reflektor lässt sich das von der Lichtquelle erzeugte Licht leistungsfähig zur Beleuchtung oder Notbeleuchtung eines Raumes oder zur Sichtbarkeit eines auf der Sichtseite der Leuchte darstellbaren Piktogramms benutzen. Außerdem weist die Leuchte wenigstens eine seitliche Rahmenabdeckung oder Gehäuseabdeckung auf, die durch eine Steck-Schwenkverbindung im einen Randbereich mit dem Basisträger verbunden ist und mit einer im gegenüberliegenden Randbereich angeordneten lösbaren Rastverbindung lösbar mit dem Basisträger verbunden ist. Diese Ausgestaltung ermöglicht sowohl eine schmale als auch seitlich großflächige Konstruktion der Leuchte, wobei im Bereich des in der Leuchte angeordneten Basisträgers raumgünstige Anordnungsbedingungen für elektrische Funktionsgeräte der Leuchte vorhanden sind und die Leuchtenabdeckung handhabungsfreundlich montier- bzw. demontierbar ist und eine gute Zugänglichkeit zum Innenraum der Leuchte gewährleistet ist.

Die Zugänglichkeit lässt sich weiter verbessern, wenn die Steck-Schwenkverbindung im oberen Bereich des Rahmens angeordnet ist und die Rastverbindung im unteren Bereich des Rahmens angeordnet ist.

Es lässt sich eine stabile Dreipunkt-Befestigung des Rahmens dadurch erreichen, dass zwei Steck-Schwenkvorrichtungen außermittig am zugehörigen Randabschnitt des Rahmens angeordnet sind.

Der Rahmen bildet mit der Scheibe eine schalenförmige Gehäuseabdeckung, die den Basisträger und daran befestigte elektrische Funktionsteile der Leuchte wenigstens teilweise überdecken, wodurch die Leuchte ein ansehnliches Äußeres erhält.

Wenn der Basisträger den Rahmen nach oben überragt, lässt er sich an einer Decke oder dergleichen befestigen. Für eine Befestigung an einer Wand kann der Basisträger rückseitig Befestigungselemente aufweisen.

Es ist vorteilhaft, wenn der Basisträger aus einem oberen Deckenträger und einem unteren Geräteträger besteht, die durch eine Schnellschlussverbindung lösbar miteinander verbunden sind. Hierdurch lässt sich der Geräteträger mit dem an ihm montierten Funktionsteilen der Leuchte handhabungsfreundlich und herstellungstechnisch vormontieren oder auch demontieren, wobei es an der Gebrauchsstelle nur einer Verbindung mit dem Deckenträger bedarf.

Es ist aus Gründen einer kleinen und insbesondere schmalen Konstruktion sowie einer gleichmäßigen Lichtverteilung im Bereich der Lichtabstrahlfläche günstig, das Licht von einer oder mehreren Lichtquellen im Randbereich der Scheibe einzukoppeln. Hierzu eigenen sich eine oder mehrere lichtemittierende Halbleiter, die sich vorzugsweise zwischen einer Schmalseite der Scheibe und einem gegenüberliegenden Rahmenabschnitt raumgünstig anordnen und befestigen lassen.

Die erfindungsgemäße Leuchte lässt sich mit der Anordnung eines Rahmens mit einer Scheibe an einer Breitseite einseitig oder mit der Anordnung eines Rahmens und einer Scheibe auf beiden Seiten beidseitig wirksam ausbilden, und zwar sowohl als übliche Leuchte als auch als Sicherheitsleuchte, wie z. B. eine Notleuchte oder Fluchtwegleuchte. Die erfindungsgemäße Leuchte eignet sich aber auch sehr vorteilhaft als Hinweisleuchte.

Insbesondere in dem Fall, in dem die Leuchte eine Sicherheitsleuchte ist, sind besondere Anforderungen an die Leuchte bezüglich einer wenigstens notdürftigen Beleuchtung des die Leuchte umgebenden Raumes gestellt. Dies gilt insbesondere für eine Notleuchte oder Fluchtwegleuchte oder Hinweisleuchte, deren Lichtabstrahlfläche dazu dient, ein Notlicht abzustrahlen und/oder wenigstens einen Hinweis erkennen zu lassen.

Bei der erfindungsgemäßen Leuchte weist die Leuchte in ihrem unteren Bereich, insbesondere an ihrer Unterseite, eine zweite Lichtquelle auf, die für eine nach unten gerichtete Lichtabstrahlung eingerichtet ist. Durch diese Ausgestaltung ist die Leuchte geeignet, Licht nicht nur an der wenigstens einen breitseitigen Lichtabstrahlfläche abzugeben, um durch eine breitseitige Lichtabstrahlung den die Leuchte umgebenden Raum wenigstens notdürftig zu erhellen und/oder wenigstens einen Hinweis auf der Lichtabstrahlfläche erkennen zu lassen, sondern sie strahlt darüber hinaus Licht direkt nach unten ab, das wenigstens einer notdürftigen Beleuchtung des Raumes unter ihr dient. Hierdurch wird die Beleuchtung in mehrfacher Hinsicht vorteilhaft verbessert. Zum einen erhellt das nach unten abgestrahlte Licht der zweiten Lichtquelle den unter der Leuchte befindlichen Raum, nämlich insbesondere einen Fluchtweg, mit geringem Leistungs- und Bauaufwand wenigstens notdürftig , so dass die Leuchte sich auch als Fluchtwegleucht eignet. Zum anderen ist die unterseitige Lichtabstrahlung besonders wirksam, weil die vorliegende Leuchte, insbesondere eine Fluchtwegleuchte, im vorhandenen Raum gut sichtbar und deshalb verhältnismäßig hoch positioniert wird und deshalb die unterseitige Lichtabstrahlung den unter der Leuchte befindlichen Fluchtweg günstig zu beleuchten vermag.

Die erfindungsgemäße Leuchte weist weiterhin eine Kontrolllampe zur Anzeige eines gewünschten Betriebszustands auf, die derart rückseitig von der Scheibe angeordnet ist, dass ihr Licht durch die Abstrahlfläche von außen sichtbar ist. Auch die zweite Lichtquelle ist vorzugsweise durch wenigstens ein lichtemittierendes Halbleiterelement, wie z.B. eine Leuchtdiode, gebildet, dass sich durch einen geringen Stromverbrauch, eine lange Lebensdauer und eine sichere Funktion auszeichnet.
Im Rahmen der Erfindung kann die zweite Lichtquelle an einer geeigneten Stelle der Unterseite der Leuchte angeordnet sein. Wenn sie - in der Blickrichtung gegen die Lichtabstrahlfläche gesehen - im mittleren Bereich, insbesondere im mittleren Längsbereich, der Unterseite angeordnet ist, wird die angestrebte Verbesserung der Raumbeleuchtung optimal erfüllt, da auch die Leuchte selbst im oberen Bereich des Raumes vorzugsweise mittig positioniert wird.

Die erfindungsgemäße Ausgestaltung eignet sich besonders gut für eine Sicherheitsleuchte einer wahlweisen Konstruktion, insbesondere für eine solche, deren Gehäuse eine schmale und hochkant angeordnete Form aufweist, wobei an einer oder auf beiden einander gegenüberliegenden Breitseiten des Gehäuses eine Lichtabstrahlfläche angeordnet ist.

In weiteren Unteransprüchen sind Merkmale enthalten, die zu einer kleinen und kostengünstig herstellbaren Konstruktion führen und im weiteren die Handhabung der Einzelteile der Leuchte verbessern.

Nachfolgend werden vorteilhafte Ausgestaltungen der Erfindung anhand von bevorzugten Ausführungsbeispielen und Zeichnungen näher erläutert. Es zeigt:
- Fig. 1: eine erfindungsgemäße Leuchte in perspektivischer Vorderansicht von oben;
- Fig. 2: die Leuchte in perspektivischer Vorderansicht von unten;
- Fig. 3: die vorderseitig offene Leuchte in perspektivischer Vorderansicht;
- Fig. 4: die Leuchte im vertikalen Querschnitt gemäß der Linie IV-IV in Fig. 1;
- Fig. 5: eine erfindungsgemäße Leuchte in perspektivischer Vorderansicht von oben in abgewandelter Ausgestaltung;
- Fig. 6: die Leuchte gemäß Fig. 5 in perspektivischer Vorderansicht von unten;
- Fig. 7: einen Basisträger der Leuchte gemäß Fig. 5 bzw. 6 in perspektivischer Vorderansicht von unten;
- Fig. 8: die Leuchte gemäß Fig. 5 bzw. 6 im vertikalen Schnitt VIII-VIII in Fig. 5.

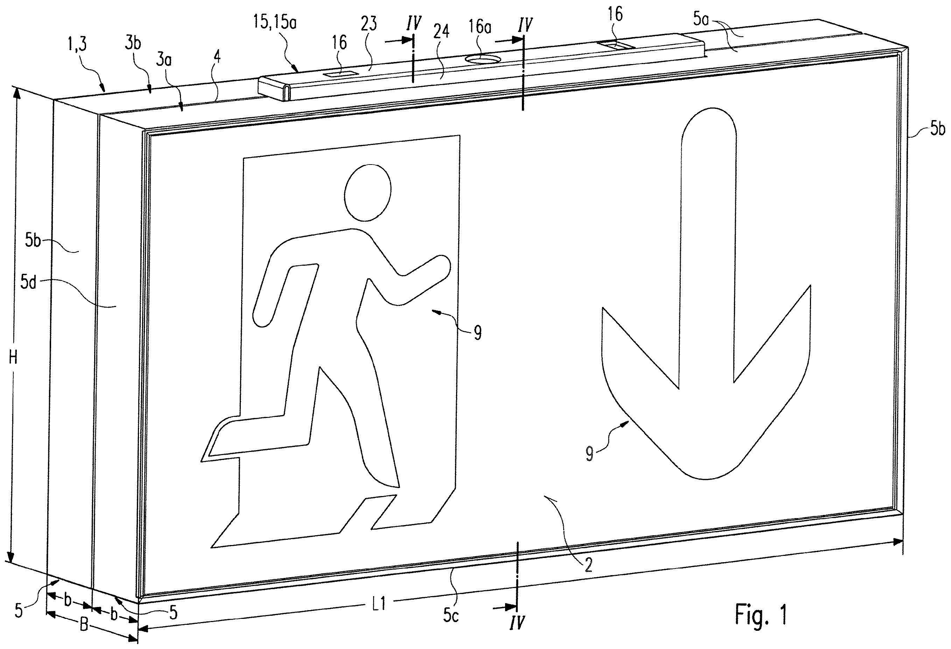

Die in ihrer Gesamtheit mit 1 bezeichnete Leuchte weist eine schmale und hochkant angeordnete Konstruktion auf mit - beim Ausführungsbeispiel gemäß Fig. 1 bis 4 - zwei einander gegenüberliegenden breitseitigen Lichtabstrahlflächen 2, die an den Breitseiten eines entsprechend schmal ausgebildeten und hochkant angeordneten Gehäuses 3 angeordnet sind. Das Gehäuse 3 ist bezüglich seinen breitseitigen Lichtabstrahlflächen 2 vertikal mittig an einer Teilungsfuge 4 geteilt, wodurch sich zwei, vorzugsweise einander gleiche, Gehäuseabdeckungen 3a, 3b ergeben.

Das Gehäuse 3 bzw. die Gehäuseabdeckungen 3a, 3b weisen beim Ausführungsbeispiel eine - auf die breitseitigen Lichtabstrahlflächen 2 gesehen - rechteckförmige und somit kastenförmige Form auf. Sie bestehen jeweils aus einem Rahmen 5, dessen Breite b der Hälfte der entsprechenden Breite B des Gehäuses 3 entspricht, einem Lichtleiter 6 in Form einer Scheibe mit einer vorderseitigen, im wesentlichen der zugehörigen Lichtabstrahlfläche 2 entsprechenden Lichtleiterabstrahlfläche 2a, einer Lichtquelle 7, deren Licht vorzugsweise schmalseitig in den Lichtleiter 6 eingekoppelt wird, und einem Reflektor 8, der an der der Lichtleiterabstrahlfläche 2a gegenüberliegenden Innenseite des Lichtleiters 6 angeordnet ist. Da die Gehäuseabdeckungen 3a, 3b wahlweise an der Vorderseite und der Rückseite montierbar bzw. austauschbar sind und vorzugsweise gleich ausgebildet sind, wird im folgenden nur eine Gehäuseabdeckung, nämlich die in den Fig. 1 bis 4 hintere bzw. linke Gehäuseabdeckung 3b, beschrieben.

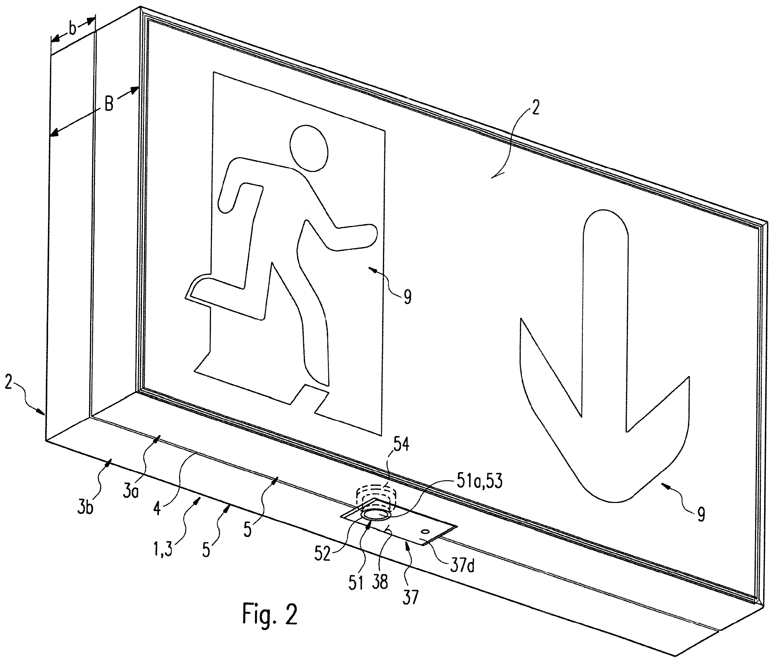

Die Gehäuseabdeckung 3b ist dazu eingerichtet, wenigstens im Betrieb der Leuchte 1 bei einem Blick auf die Lichtabstrahlfläche 2 ein Piktogramm 9 sichtbar zu machen, das einem Betrachter einen Hinweis gibt, z. B. einen Fluchtweg angibt, und auf der Lichtleiterabstrahlfläche 2a oder an einer außenseitig vom Lichtleiter 6 angeordneten Schutzscheibe oder Lichtaustrittsscheibe 11 sichtbar gemacht werden kann, z. B. an deren Außen- oder Innenseite angeordnet sein kann, wie es in Fig. 1 und 2 für die Gehäuseabdeckung 3a dargestellt ist.

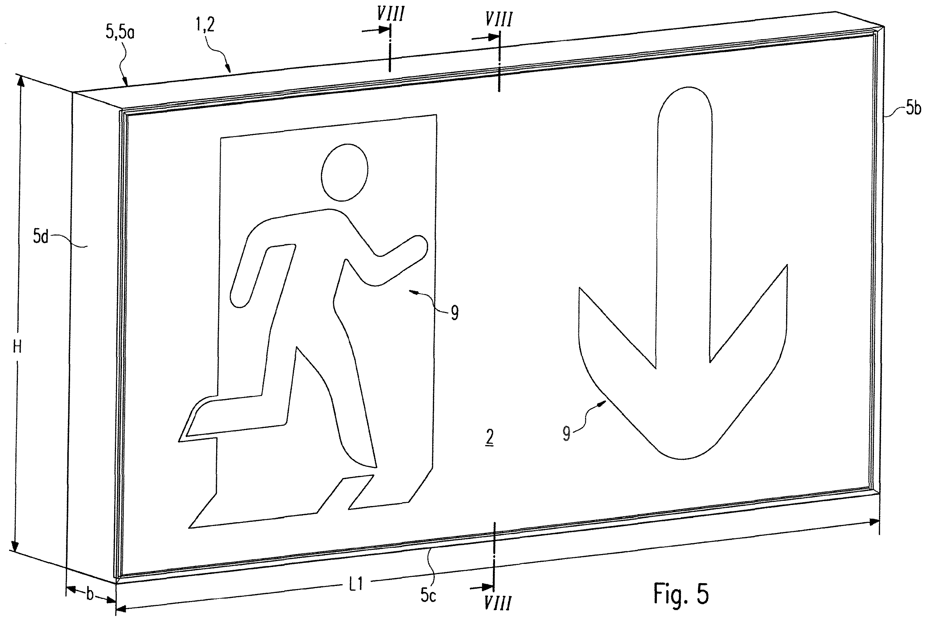

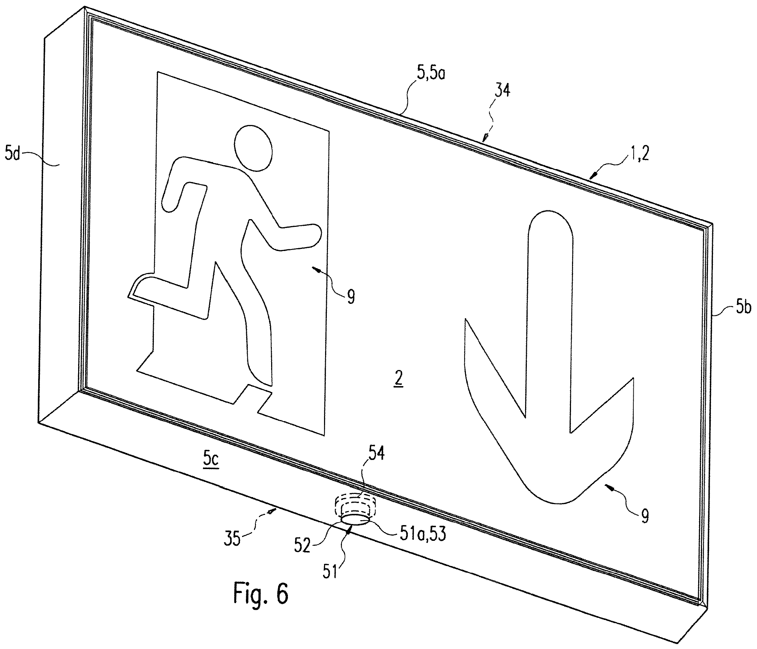

Bei allen Ausführungsbeispielen besteht der Rahmen 5 aus vier Rahmenabschnitten 5a, 5b, 5c, 5d, die jeweils in einem zugehörigen Eckenbereich des Rahmens 5, vorzugsweise an Gehrungsflächen, aneinander anliegen und in nicht dargestellter Weise befestigt sind, z. B. durch Kleben. Zur Halterung des Reflektors 8, des Lichtleiters 6 und der Lichtaustrittsscheibe 11 sind in den Rahmenabschnitten 5a bis 5d innenseitige Längsnuten vorgesehen, in die die betreffenden Bauteile eingesteckt sind. Hierdurch sind diese Bauteile im geschlossenen Rahmen 5 allseitig positioniert. Es können dem Lichtleiter 6 und der Lichtaustrittsscheibe 11 jeweils eine eigene Aufnahmenut 12, 13 zugeordnet sein. Beim Ausführungsbeispiel sind drei Aufnahmenuten 12, 13, 14 nebeneinander angeordnet, von denen die erste Aufnahmenut 14 der Befestigung der Gehäuseabdeckung 3b an einem Basisträger 15 dient, der zum einen Befestigungselemente 16 zum Befestigen des Basisträgers 15 an einer Decke (Fig. 1 bis 4) oder einer Wand (Fig. 5 bis 8) und ein Kabeldurchführungsloch 16a aufweist und auch dazu dient, elektrische Funktionsteile der Leuchte 1 im Gehäuse 3 zu tragen, z. B. Anschluss-Klemmelemente 18, einen Akkumulator 19 und ein Betriebsgerät 21. Diese elektrischen Geräte sind vorzugsweise breitseitig zugänglich am Basisträger 15 lösbar befestigt.

Die Rahmenabschnitte 5a bis 5d sind vorzugsweise Profilabschnitte, die z. B. aus Kunststoff oder Metall, insbesondere Leichtmetall, bestehen und extrudiert oder gezogen sein können. Die Aufnahmenuten 13, 14 können an einer oder an beiden Seiten eine Hinterschneidung aufweisen, die z. B. durch einen von der zugehörigen Profilwand abstehenden und die zugehörige Aufnahmenut 12, 14 verkleinernden Profilwandsteg gebildet ist. Die inneren Profilwände begrenzen zugleich einander benachbarte Aufnahmenuten 12, 13 und 14.

Die horizontale Länge L1 des Gehäuses 3 bzw. der Gehäuseabdeckungen 3a, 3b ist vorzugsweise größer als deren Höhe H.

Beim Ausführungsbeispiel besteht der Basisträger 15 aus zwei Teilen, nämlich einem Deckenträger 15a, der die vorzugsweise oberseitigen Befestigungselemente 16 zur Befestigung an der Decke aufweist, und einem Geräteträger 15b, der die elektrischen Funktionsteile 18, 19 und 21 trägt.

Der Deckenträger 15a weist seine Befestigungselemente 16 und das Durchführungsloch 16a in einer oberen Deckenwand 23 auf, die beim Ausführungsbeispiel durch den horizontalen oberen Steg eines auf dem Kopf stehenden U-Teils gebildet ist, dessen nach unten ragende Deckenträgerschenkel 24 die zugehörigen Verbindungselemente einer Schnellschlussverbindung 22 zum Verbinden des Geräteträgers 15b aufweisen, die z. B. durch horizontale Schlitze 22a gebildet sind, die sich von den Stirnenden der Deckenträgerschenkel 24 in diese hinein erstrecken. Die Länge L2 des Deckenträgers 15a bzw. der Deckenträgerschenkel 24 ist kleiner als die Länge L1 des Rahmens 5, so dass zwischen dem Deckenträger 15a und den jeweils gegenüberliegenden seitlichen Rahmenteilen 5a, 5d jeweils ein Abstand c mit einem zugehörigen Freiraum vorhanden ist.

Das dem Geräteträger 15b zugehörige Verbindungsteil der Schnellschlussverbindung 22 ist jeweils durch einen horizontalen Verbindungsschenkel 22b gebildet, der von Seitenrandschenkeln 25 des Geräteträgers 15b nach innen absteht, wobei zwischen den Seitenwandschenkeln 25 ein Abstand d vorhanden ist, der größer ist als die Länge L2 des Deckenträgers 15a. Infolgedessen ist der Geräteträger 15b durch ein horizontales und quer gerichtetes Einstecken des Geräteträgers 15b mit den Verbindungsschenkeln 22b in die Verbindungsschlitze 22a montierbar bzw. demontierbar und in der vertikalen Längsmittelebene E1 positioniert, da die Verbindungsschenkel 22b sich z. B. bis zum Grund der Verbindungsschlitze 22a erstrecken können. Zur zusätzlichen Positionierung in der Querrichtung kann z. B. eine Verschraubung 27 mit einer Schraube 27a vorgesehen sein, die einen vom Geräteträger 15b nach oben ragenden Schenkel 27b mit dem jeweils benachbarten Deckenträgerschenkel 24 verschraubt, wobei sie darin angeordnete Befestigungslöcher durchfasst, von denen wenigstens ein Befestigungsloch von einer für eine Blechschraube erforderlichen Größe ausgebildet sein kann. Für die Schraube 27a kann im zugehörigen Deckenträgerschenkel 24 eine Einbuchtung 28 angeordnet sein, in die das zugehörige Ende der Schraube 27b versenkt eintauchen kann.

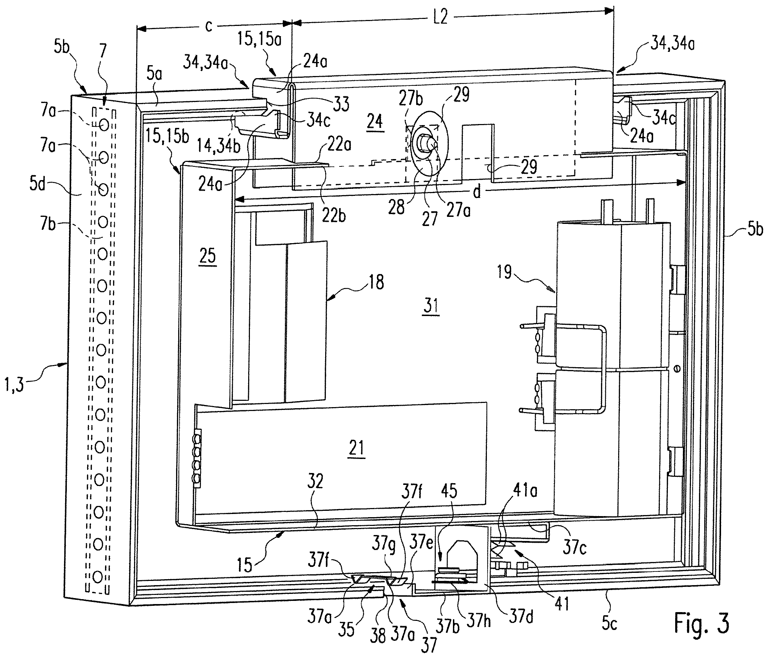

Um den Geräteträger 15b wahlweise von der einen oder anderen Breitseite montieren bzw. demontieren zu können, ist der Schenkel 27b außermittig am Geräteträger 15b angeordnet, wobei in den Deckenträgerschenkeln 24 außermittig versetzt jeweils eine Durchführungsausnehmung 29 für den Schenkel 27b angeordnet ist, durch die dieser durchführbar und gegen den anderen Deckenträgerschenkel 24 bewegbar sowie durch die zugehörige ebenfalls längs versetzte Verschraubung 27 verschraubbar bzw. lösbar ist. Der vereinfacht dargestellte Kopf 27c der Schraube ist somit durch die zugehörige Durchführungsausnehmung 29 zugänglich, wie es Fig. 3 rückseitig verdeutlicht. Es ist somit möglich, den Geräteträger 15b mit dem Deckenträger 15a in zwei um 180° verdrehten Stellungen zu verbinden.

Der Geräteträger 15b kann z. B. eine sich quer und parallel zur Längsmittelebene E1 versetzt erstreckende Basiswand 31 aufweisen, von der sich am oberen Rand der Schenkel 27b zunächst horizontal nach innen und dann nach oben erstreckt und die Seitenwandschenkel 25 quer nach innen abstehen. Außerdem kann von der Basiswand 31 am unteren Rand ein horizontaler unterer Randschenkel 32 nach innen abstehen, der z. B. der Auflage von elektrischen Geräten der Leuchte 1 dienen kann.

Um im montierten Zustand einen kleinen Abstand von der Decke zu gewährleisten, überragt der Deckenträger 15a das Gehäuse 3 bzw. die Gehäuseabdeckung 3b nach oben. Hierdurch werden bei einer Befestigung des Deckenträgers 15a an der Decke, z. B. durch wenigstens eine Verschraubung, Zwängungen zwischen den Gehäuseabdeckungen 3a, 3b und der Decke vermieden, insbesondere beim Montieren bzw. Demontieren wenigstens einer Gehäuseabdeckung 3a, 3b.

Um das Durchragen des Deckenträgers 15a durch die oberen Rahmenabschnitte 5a zu gewährleisten, sind in diesen zum freien Rand hin ausmündende Ausnehmungen 33 für den Deckenträger 15a angeordnet, in denen letzterer hälftig sitzt.

Die Gehäuseabdeckungen 3a, 3b sind jeweils durch eine zweite Schnellschlussverbindung 34 und eine dritte Schnellschlussverbindung 35 am Basisträger 15 montierbar, die jeweils in einander gegenüberliegenden Randbereichen zwischen der jeweils zugehörigen Gehäuseabdeckung 3a, 3b und dem Basisträger 15 wirksam sind. Vorzugsweise ist die eine dieser beiden Schnellschlussverbindungen, hier die zweite Schnellschlussverbindung 34, durch eine Steck-Schwenkverbindung und die im gegenüberliegenden Randbereich angeordnete dritte Schnellschlussverbindung 35 durch eine Rastverbindung gebildet. Die zweite Schnellschlussverbindung 34 ist zwischen dem oberen Rahmenabschnitt 5a und einem Verbindungselement des Deckenträgers 15a angeordnet, wobei wegen des Vorhandenseins des Deckenträgers 15a zwei zweite Schnellverbindungsvorrichtungen 34a zwischen den Enden des Deckenträgers 15a und den gegenüberliegenden Bereichen des oberen Rahmenabschnittes 5a angeordnet sind, die aufgrund ihres Abstands von der Längsmitte zu einer Stabilisierung der lösbaren Befestigung im Sinne einer Dreipunkt-Befestigung unter Berücksichtigung der gegenüberliegenden dritten Schnellschlussverbindung 35 bzw. Rastverbindung fuhren.

Beim Ausführungsbeispiel sind die Schnellschlussverbindungsvorrichtungen 34a, durch eine Verbindungsausnehmung 34b, hier die Aufnahmenut 14, und einen darin einfassenden Verbindungsvorsprung 34c gebildet, der in einem dem seitlichen Abstand der Aufnahmenut 14 von der Längsmittelebene E1 entsprechenden Abstand e von der Längsmittelebene E1 am Deckenträger 15a angeordnet ist und dadurch ein Aufstecken der jeweiligen Gehäuseabdeckung 3a, 3b mit der Aufnahmenut 14 auf den Vorsprung 34c in einer seitlich abgeschwenkten Position ermöglicht und somit ein Einhängen ermöglicht, wobei die zweite Schnellschlussverbindung 34 vorzugsweise am oberen Rand des Gehäuses 3 angeordnet ist.

Die Verbindungsvorsprünge 34c sind z. B. am oberen Rand eines Stimschenkels 24a angeordnet, der sich U-förmig von der Deckenwand 23 des Deckenträgers 15a erstreckt.

Aus einer seitlich abgeschwenkten Einführungsstellung kann dann die betreffende Gehäuseabdeckung 3a bzw. 3b zur Längsmittelebene E1 hin eingeschwenkt und mit der dritten Schnellschlussverbindung 35 verbunden werden, insbesondere handhabungsfreundlich verrastet werden. Hierzu ist eine Rastverbindung vorgesehen.

Insbesondere dann, wenn die zweite Schnellschlussverbindung 34 durch eine Steck-Schwenkverbindung gebildet ist, bei der z. B. die betreffende Gehäuseabdeckung 3a, 3b in einer Schrägstellung einhängbar und dann einschwenkbar ist, ist es zur Stabilisierung der Verbindung der Gehäuseabdeckung 3a, 3b vorteilhaft, in dem der zweiten Schnellschlussverbindung 34 gegenüberliegenden Randbereich des Rahmens 5 eine Formschlussverbindung F zwischen dem betreffenden Rand des Rahmens 5 und dem Basisträger 15 vorzusehen, die in der Rahmenebene quer zur Schwenkachse der Steck-Schwenkverbindung eine Relativbewegung zwischen dem Basisträger 15 und dem Rahmen 5, insbesondere dem unteren Rahmenabschnitt 5c, unter Berücksichtigung eines Bewegungsspiels zum Aus- und Einschwenken der Gehäuseabdeckung 3a bzw. 3b formschlüssig sperrt.

Bei den vorliegenden Ausführungsbeispielen gemäß Fig. 1 bis 8 ist die Formschlussverbindung F in der Vertikalen dadurch gebildet, dass der Rahmenabschnitt 5c den Basisträger 15 bzw. den Geräteträger 15b oder ein Anbauteil derselben mit einem Bewegungsspiel formschlüssig untergreift, dass ein Aus- und Einschwenken der betreffenden Gehäuseabdeckung 3a, 3b gestattet, jedoch eine Relativbewegung zwischen der Gehäuseabdeckung 3a bzw. 3b und dem Basisträger 15 in der Ebene des zugehörigen Rahmens 5 formschlüssig sperrt.

In der Horizontalen ist die Formschlussverbindung F z. B. dadurch gebildet, dass die Gehäuseabdeckung 3a, 3b und der Basisträger 15 bzw. der Geräteträger 15b sich gegen eine horizontale Relativbewegung formschlüssig sperren, z. B. dadurch, dass beim horizontalen Bewegen des Geräteträgers 3a bzw. 3b der Schlitzgrund des betreffenden Verbindungsschlitzes 22a gegen den darin einfassenden Verbindungsschenkel 22b stößt oder die seitlichen Ränder der Ausnehmung 33 vom oberen Rahmenabschnitt 5a gegen den Deckenträger 15a bzw. dessen Deckenträgerschenkel 24 oder Stirnschenkel 24a stossen.

Die dritte Schnellschlussverbindung 35 ist als Rastverbindung bei den vorliegenden Ausführungsbeispielen durch eine Rastfeder 37 mit einem aus einer Raststellung nach innen einfederbaren Rastvorsprung 37a gebildet, der sich unmittelbar oder mittelbar an einem einfederbaren Federschenkel 37b der Rastfeder 37 befindet.

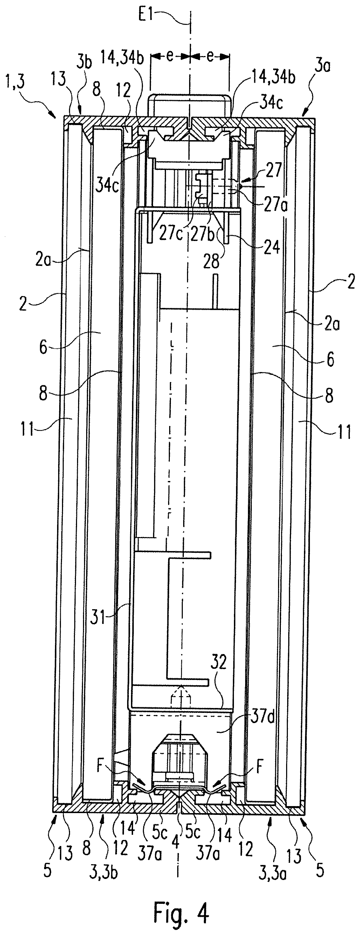

Beim Ausführungsbeispiel gemäß Fig. 1 bis 4 weist die Rastfeder 37 mehrere Z-förmig bzw. U-förmig angeordnete Schenkelabschnitte auf, und sie ist so ausgebildet und angeordnet, dass sie mit einem Basisschenkel 37c am Basisträger 15 bzw. Geräteträger 15b befestigt sein kann und mit einem Federsteg 37d abgewinkelt und mit dem Federschenkel 37b in der Ebene des unteren Rahmenabschnitts 5c angeordnet sein kann, insbesondere mit dessen Unterseite abschließend, wobei der Federschenkel 37b sich in einer randseitig ausmündenden Ausnehmung 38 des Rahmenschenkels 5c mit Bewegungsspiel befindet. Es ist vorzugsweise ein für beide im horizontalen Abstand zugehöriger Rastausnehmungen, hier der Aufnahmenuten 14, angeordnete Rastvorsprünge 37a der Gehäuseabdeckungen 3a, 3b gemeinsamer Federschenkel 37b vorgesehen, der durch einen Quersteg 37e Z-förmig mit dem Federschenkel 37b verbunden ist, wobei die Rastvorsprünge 37a bezüglich der vertikalen Längsmittelebene E1 so beidseitig versetzt sind, dass sie in die jeweils zugehörige Aufnahmenut 14 eintauchen können und durch einen gewissen Kraftaufwand beim Öffnen der jeweiligen Gehäuseabdeckung 3a, 3b selbsttätig einfedern. Das Ein- und Ausfedern beim Schließen bzw. Öffnen lässt sich durch schräge oder gerundete Anlaufflächen 37f an den Rastvorsprüngen 37a und/oder an Rändern der Rastausnehmungen, hier an den zugehörigen Profilwänden, verwirklichen. Beim Ausführungsbeispiel sind die Rastvorsprünge 37a an elastisch aus- und einfederbaren Endabschnitten eines Mittelstegs 37g angeformt, der vom Quersteg 37e absteht. Der vertikale Querschnitt gemäß Fig. 4 verläuft im Bereich des Mittelstegs 37g.

Das Eintauchen der Rastfeder 37 in die Ausnehmung 38 oder die Ausnehmung 38 ermöglicht eine manuelle Zugänglichkeit zur Rastfeder 37 von außen, z. B. um ein Einfedern und Öffnen der Rastverbindung zu ermöglichen oder zu erleichtern. Dies ist jedoch nicht unbedingt erforderlich, weil die Rastfeder 37 durch die Anlaufflächen 37f beim Schließen und Öffnen ein- bzw. ausfedern kann. D. h., eine Ausnehmung 38 mit einer darin eintauchenden Rastfeder 37 ist nicht unbedingt erforderlich, die Rastfeder kann sich nämlich innenseitig vom Rahmenschenkel 5c erstrecken. Ein solches Ausführungsbeispiel ist beim zweiten Ausführungsbeispiel gemäß Fig. 5 bis 8 vorhanden.

Wenn das Gehäuse 3 bzw. der Rahmen 5 aus elektrisch leitendem Material besteht, z. B. aus Metall, ist eine Erdungsvorrichtung 41 vorgesehen, die einen elektrischen Kontakt und dadurch einen Stromfluss zwischen dem Gehäuse 3 bzw. Rahmen 5 und einer elektrischen Sicherheitsausschaltung ermöglicht. Die Erdungsvorrichtung 41 kann z. B. Federschenkel 41a aufweisen, die in der Schließstellung der Gehäuseabdeckungen 3a, 3b mit elastischer Spannung den zugehörigen Rahmen 5 bzw. Rahmenabschnitt 5c kontaktieren und am Basisträger 15 bzw. Geräteträger 15b befestigt sind.

Das Ausführungsbeispiel gemäß Fig. 5 bis 8, bei dem gleiche oder vergleichbare Teile mit gleichen Bezugszeichen bezeichnet sind, unterscheidet sich vom vorliegenden Ausführungsbeispiel zum einen dadurch, dass das Gehäuse 3 nur hälftig ausgebildet ist, d. h. es ist nur eine Gehäuseabdeckung, nämlich die in den Fig. 4 und 5 in der breitseitigen Vorderansicht dargestellte Gehäuseabdeckung 3a, vorhanden, so dass die Leuchte 1 rückseitig keine Leuchtenabdeckung aufweist und der Basisträger 15 eine rückseitige Abdeckung bildet. Außerdem ist der Basisträger 15 unterschiedlich ausgebildet, wobei ein Deckenträger 15a des vorbeschriebenen Ausführungsbeispiels fehlt und der Basisträger 15 nur als Geräteträger 15b ausgebildet ist, z. B. in anderer Konstruktion, wie beim Ausführungsbeispiel gemäß Fig. 1 bis 4.

Das Ausführungsbeispiel gemäß Fig. 5 bis 8 kann so ausgebildet sein, dass die Gehäuseabdeckung 3a identisch ist mit den einander gleichen Gehäuseabdeckungen 3a, 3b des Ausführungsbeispiels nach Fig. 1 bis 4. In diesem Fall lassen sich die Gehäusehälften des ersten Ausführungsbeispiels wahlweise auch beim zweiten Ausführungsbeispiel montieren bzw. umgekehrt. Das dargestellte Ausführungsbeispiel gemäß Fig. 5 bis 8 unterscheidet sich dadurch, dass die Rastfeder 37 innenseitig vom unteren Rahmenabschnitt 5c angeordnet, und eine zweite Lichtquelle an der Unterseite der Gehäuseabdeckung 3a angeordnet ist, was noch beschrieben wird.

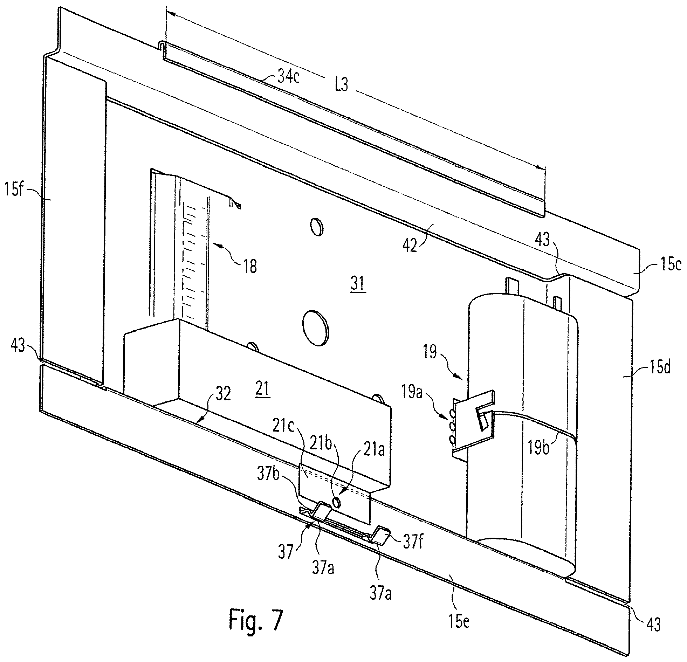

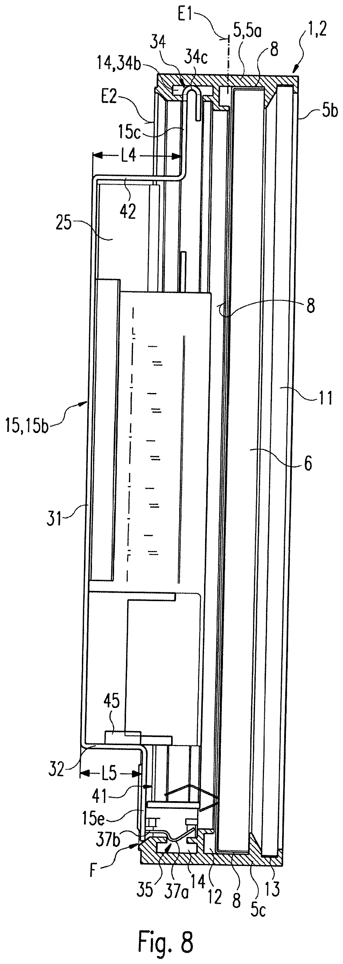

Erste Unterscheidungsmerkmale des zweiten Ausführungsbeispiels sind vier sich im wesentlichen parallel zur Längsmittelebene E1 oder sich darin erstreckende Randstreifen 15c , 15d, 15e, 15f, von denen die seitlichen Randstreifen 15d, 15f und der untere Randstreifen 15e sich von den Seitenrandschenkeln 25 und dem unteren Randschenkel 32 jeweils in einer Ebene nach außen erstrecken. Anstelle der Verbindungsschenkel 22b ist ein oberer Randschenkel 42 vorgesehen, der sich von der Basiswand 31 in das Gehäuse 3 hinein erstreckt und von dessen innerem Rand sich der Randschenkel 15c nach oben erstreckt und ein Schnellschlussverbindungselement der Schnellschlussverbindung 34 bildet. Wie aus Fig. 7 und 8 zu entnehmen ist, wird das Schnellschlussverbindungselement durch den oberen Rand des Randschenkels 15c gebildet, der im montierten Zustand der Gehäuseabdeckung 3a als Verbindungsvorsprung 34c in eine Verbindungsausnehmung 34b, hier in die Aufnahmenut 14, eintaucht, so dass auch diese Schnellschlussverbindung 34 durch ein Aufstecken der Gehäuseabdeckung 3b mit ihrer Aufnahmenut 14 auf den oberen Rand des oberen Randschenkels 15c in gekippter Position aufsteckbar und in die vertikale Schließposition gemäß Fig. 8 schwenkbar ist, in der die Gehäuseabdeckung 3b durch die zweite Schnellschlussverbindung 35, vorzugsweise ebenfalls eine Rastverbindung, verrastbar ist.

Um das Bewegungsspiel in der eine Steck-Schwenkverbindung bildenden Schnellschlussverbindung 34 gering zu halten, ist der zugehörige Verbindungsvorsprung 34c in Form des oberen Randes des Randschenkels 15c so weit verbreitert, dass es mit geringem Bewegungsspiel in die Aufnahmenut 14 passt und somit an deren Breite angepasst ist. Dies lässt sich beim Ausführungsbeispiel dadurch erreichen, dass sich vom oberen Rand des Randschenkels 15c ein Verbindungsschenkel 15g in der Form eines auf dem Kopf stehenden U absteht, insbesondere nach innen absteht und z. B. einteilig abgebogen ist. Der Verbindungsvorsprung 34c erstreckt sich in der Längsrichtung des Randes länglich, wobei seine Länge L3 mehr als ein Viertel der Gesamtlänge des Randes des Randschenkels 15c beträgt. Hierdurch ist die Befestigung der Gehäuseabdeckung 3b im Sinne einer Dreipunktanlage stabilisiert, die auch dann gewährleistet wäre, wenn zwei außermittig angeordnete Verbindungselemente angeordnet wären, wie es beim vorbeschriebenen Ausführungsbeispiel der Fall ist.

Wie sich insbesondere aus Fig. 8 entnehmen lässt, überragt der Basisträger 15 mit seinem durch die Seitenrandschenkel 25 gebildeten rückseitigen Trägeransatz 15h mit der Basis- bzw. Rückwand 31 die rückseitige Ebene E2 der Gehäuseabdeckung 3b. Hierdurch ergibt sich beim Anbau der Leuchte 1 an einer Wand ein rückseitiger Abstand der Gehäuseabdeckung 3a von der Wand bzw. einem entsprechenden Träger, wodurch ein so genannter Schattenrand entsteht.

Die Randschenkel 15d, 15e, 15f befinden sich dabei etwa in der rückseitigen Gehäuseebene E2, wobei sie so lang bemessen sind, dass die Gehäuseabdeckung 3a mit einem Bewegungsspiel quer auf sie aufsetzbar ist und sie die rückseitige Rahmenöffnung der Gehäuseabdeckung 3b bzw. des Rahmens 5 innen weitgehend abdecken. Um den Eingriff des Verbindungsvorsprungs 34c in die Aufnahmenut 14 zu gewährleisten, ist die sich quer erstreckende Länge L4 des oberen Randschenkels 42 größer als die betreffende Länge L5 der Seitenrandschenkel 25.

Beim Ausführungsbeispiel gemäß Fig. 5 bis 8 weist die vorzugsweise durch eine Rastverbindung gebildete dritte Schnellschlussverbindung 35 einen Federschenkel 37b mit einem Rastvorsprung 37a auf, der sich vom unteren Randbereich des unteren Randschenkels 15e quer absteht, so dass der Rastvorsprung 37a in die zugehörige Aufnahmenut 14 beim Schließen elastisch einfedern kann. Wie bereits beim vorbeschriebenen Ausführungsbeispiel ist auch hier der Federschenkel 37b mit dem Rastvorsprung 37a ein einteiliges Stanz-Biegeteil, wobei zur Vergrößerung der Rastwirkung und zur weiteren Stabilisierung der Dreipunktanlage zwei Rastvorsprünge 37a vorgesehen sein können, die in einem längs des Umfangsrandes gerichteten Abstand voneinander angeordnet sind und dabei jeweils an einem Federschenkel oder an einem gemeinsamen Federschenkel 37b angeordnet sein können, s. Fig. 7 und 8. Bei diesem Ausführungsbeispiel ist die Rastfeder 37 bzw. die dritte Schnellschlussverbindung 35 von außen weder sichtbar noch zugänglich, da sie innenseitig vom zugehörigen Rahmenschenkel 5c angeordnet ist.

Bei diesem Ausführungsbeispiel ist die Formschlussverbindung F vertikal dadurch gebildet, dass in der Schließstellung der untere Rahmenabschnitt 5c den Basisträger 15 bzw. Geräteträger 15b oder ein Anbauteil desselben untergreift, z. B. die Rastfeder 37 und/oder den Randschenkel 15e, s. Fig. 8.

Bei beiden Ausführungsbeispielen ist jeweils der Geräteträger 15b, der beim Ausführungsbeispiel gemäß Fig. 5 bis 8 auch den Basisträger 15 bildet, ein einteiliges Stanz-Biegeteil aus Blech mit den vorbeschriebenen Wandabschnitten. Um Zwängungen zwischen den jeweils abgebogenen und benachbarten Schenkeln des Geräteträgers 15b zu vermeiden, sind dazwischen Spalte 43 vorhanden, die bereits in der Platine, aus der das Stanz-Biegeteil gestanzt und gebogen wird, beim Schneiden der Platine als Spalt 43 eingeschnitten werden.

Die Lichtquelle 7 ist dem vorzugsweise scheibenförmigen Lichtleiter 6 schmalseitig gegenüberliegend angeordnet, wobei sie das Licht schmalseitig in den Lichtleiter 6 einstrahlt und dieser das Licht breitseitig abstrahlt. Hierdurch wird insbesondere bei einem Lichtleiter 6 in Form einer Scheibe eine im wesentlichen gleiche Verteilung des Lichts im Bereich der Lichtabstrahlseite der Leuchte 1 erreicht.

Die Lichtquelle 7 ist vorzugsweise in der Längsrichtung der betreffenden Schmalseite länglich ausgebildet. Sie kann auch aus mehreren Lichtquellen 7 bestehen, die in der Längsrichtung der Schmalseite des Lichtleiters 6 hintereinanderliegend angeordnet sind. Für eine einzelne, insbesondere punktförmige, oder längliche Lichtquelle 7 eignet bzw. eignen sich ein oder mehrere reihenförmig angeordnete lichtemittierende Halbleiterelemente, wie Leuchtdioden 7a, siehe Fig. 3. Diese können z. B. wie folgt ausgebildet sein, nämlich in vorkonfektionierter PCB (printed circuit board)-Ausführung, bei der mehrere eingehäuste LED's auf einer Leiterplatte, vorzugsweise eng gepackt, angeordnet sind, oder in vorkonfektionierter COB (chip on board)-Ausführung, die in der Regel kleinbauender ist als LED's in PCB-Ausführung, bei der ein oder mehrere LED-Halbleiterchip(s) direkt auf der Leiterplatte angeordnet ist bzw. sind. Bei der Anordnung mehrerer Lichtquellen 7 ist es möglich, diese in unterschiedlichen Farben auszubilden, wodurch sich Licht in unterschiedlichen und wahlweise bestimmbaren Farben erzeugen lässt.

Bei den vorliegenden Ausführungsbeispielen ist eine längliche Lichtquelle 7 jeweils im Randbereich der Gehäuseabdeckungen 3a, 3b bzw. des Lichtleiters 6 so angeordnet, dass das Licht schmalseitig in den Lichtleiter 6 einstrahlbar ist. Die längliche Lichtquelle 7 kann durch mehrere reihenförmig angeordnete LED's 7a angeordnet sein, die auf einem streifenförmigen Träger 7b, z. B. einer Platine oder Leiterplatte, zwischen einem Rahmenabschnitt und dem Lichtleiter 6 angeordnet ist, z. B. an der Innenseite des betreffenden Rahmenabschnitts, z. B. 5d, befestigt ist, vorzugsweise vorgefertigt befestigt ist. Die Lichtquelle 6 bzw. die wenigstens eine LED 7a ist bzw. sind vorzugsweise in einem seitlichen Randbereich der Leuchte 1 angeordnet, wobei sie das Licht etwa horizontal in den Lichtleiter 6 einstrahlen.

Bei einer vorzugsweise gleichen Konstruktion der Gehäuseabdeckungen 3a, 3b ist die in Fig. 3 nicht dargestellte Gehäuseabdeckung 3b horizontal um 180° gedreht, so dass in dieser Position die Einstrahlung des Lichts in den Lichtleiter 6 von rechts erfolgt, während die Einstrahlung bei der Gehäuseabdeckung 3a von links erfolgt.

Es ist zur Kontrolle der Funktion der Leuchte 1 vorteilhaft, ihr eine Kontrolllampe 45 zuzuordnen, die z. B. ebenfalls durch eine Leuchtdiode gebildet ist und insbesondere dann raumgünstig angeordnet ist, wenn sie innenseitig vom Lichtleiter 6 angeordnet und z. B. am Basis- bzw. Geräteträger 15, 15b befestigt ist, z. B. an dem den Federschenkel 37b aufweisenden Federteil, insbesondere am bzw. auf dem Federschenkel 37b oder einem Tragschenkel 37h, der z. B aus dem Federsteg 37d ausgeschnitten und ausgebogen ist.

Beim Ausführungsbeispiel nach Fig. 5 bis 8 kann die Kontrolllampe 45 innen im unteren Bereich des Geräteträgers 15 angeordnet sein, z. B. am Randschenkel 15e oder 32.

Der Zweck der Kontrolllampe 45 kann z. B. sein, durch Leuchten oder Nicht-Leuchten anzuzeigen, ob die Leuchte 1 sich in einem gewünschten Betriebszustand befindet. Bei einer Sicherheitsleuchte kann dadurch z. B. angezeigt werden, ob sie sich in einem sicheren Bereitschaftszustand für den Sicherheitsfall bzw. Notfall, befindet. Es kann z. B. angezeigt werden, ob der zugehörige Akkumulator 19 genügend Energie zur Verfügung stellt oder entladen ist.

Das Licht der Kontrolllampe 45 ist durch die Abstrahlfläche 2 von außen sichtbar. Eine bevorzugte Anordnungsstelle für die Kontrolllampe 45 ist der untere Randbereich der Gehäuseabdeckung 3a bzw. 3b, so dass auch das Licht der Kontrolllampe 45 im unteren Randbereich der Abstrahlfläche 2 sichtbar ist.

Um das in den Lichtleiter 6 eingestrahlte Licht möglichst verlustlos breitseitig abzustrahlen, ist der Reflektor 8 nicht nur an der der Lichtabstrahlfläche 2a abgewandten Seite, sondern auch an den Schmalseiten des Lichtleiters 6 angeordnet, mit Ausnahme an der oder den Stellen, an denen eine oder mehrere Lichtquellen 7, z. B. Leuchtdioden 7a, in die betreffende Schmalseite des Lichtleiters 6 einstrahlen. Beim Ausfiihrungsbeispiel ist an der Schmalseite, an der die Mehrzahl Lichtquellen 7 angeordnet ist, kein Reflektor 8 vorhanden.

Die zweite Scheibe 11 kann aus lichtdurchlässigem oder teillichtdurchlässigem Material bestehen oder an ihrer Abstrahlfläche 2 matt oder strukturiert ausgebildet sein, so dass sie diffus abstrahlt. Es ist auch vorteilhaft, die Scheibe 11 so auszubilden, dass sie ein farbiges Licht abstrahlt, insbesondere ein grünes Licht.

Die zuletzt beschriebenen Ausgestaltungen sind auch für den Lichtleiter 6 vorteilhaft. Diesbezüglich wird hervorgehoben, dass die äußere bzw. zweite Scheibe 11 nicht unbedingt erforderlich ist und weggelassen werden kann, so dass die Lichtabstrahlungsfläche 2a des Lichtleiters die Abstrahlfläche der Leuchte 1 ist.

Die zuvor beschriebene Leuchte 1 eignet sich vorzüglich als Sicherheitsleuchte, z.B. als Notleuchte oder Fluchtwegleuchtc oder Hinweisleuchte.

Da die Lichtabstrahlung an einer oder an beiden Seiten der Leuchte 1 hauptsächlich seitlich erfolgt, ist es vorteilhaft, die Leuchte 1 mit einer zweiten Lichtquelle 51 an der Unterseite des Gehäuses 3 auszubilden, wobei die zweite Lichtquelle 51 für eine nach unten gerichtete Lichtabstrahlung eingerichtet ist. Diese nach unten gerichtete Lichtabstrahlung verbessert die Beleuchtung des die Leuchte 1 enthaltenden Raumes unterhalb der Leuchte 1, wo eine Beleuchtung durch die breitseitige Lichtabstrahlung gering ist. Durch die zweite Lichtquelle 51 wird somit die Beleuchtung des Raumes unter der Leuchte 1 verbessert. Deshalb eignet sich diese Ausgestaltung besonders gut für eine Fluchtwegleuchte.

Wie bereits die erste Lichtquelle 7 ist auch die zweite Lichtquelle 51 vorzugsweise durch wenigstens ein lichtemittierendes Halbleiterelement gebildet, bei dem es sich z.B. um eine Leuchtdiode 51a handeln kann. Die vorbeschriebenen Ausbildungen für lichtemittierende Halbleiterelemente gelten auch für die zweite Lichtquelle 51.

Zur Anordnung der zweiten Lichtquelle 51 kann die Leuchte 1 unterseitig eine Ausnehmung 52 bzw. ein Loch aufweisen, durch das die zweite Lichtquelle 51 nach unten abzustrahlen vermag. Dabei kann die zweite Lichtquelle 51 in der Ausnehmung angeordnet sein und diese im wesentlichen verschließen oder hinter der Ausnehmung 52 angeordnet sein und z. B. in die Ausnehmung 52 hineinragen. Dabei kann die Ausnehmung 52 durch eine Schutzscheibe 53 aus lichtdurchlässigem Material, z.B. Glas oder Kunststoff, sein und die Lichtquelle 51 hinter der Schutzscheibe 53 angeordnet sein. In dem Fall, in dem die Lichtquelle 51 durch eine Leuchtdiode 51a gebildet ist, kann diese direkt in die Ausnehmung 52 eingesetzt sein, wobei die lichtdurchlässige Abstrahlkappe oder Linse der Leuchtdiode die Ausnehmung 52 verschließt.

Auch bei diesem Ausführungsbeispiel kann die zweite Lichtquelle 51 an bzw. unter einem flachen Träger 54, z. B. eine Platine oder Leiterplatte, angeordnet sein, die innenseitig am Rahmenteil 5c angeordnet ist.

Die zweite Lichtquelle 51 ist vorzugsweise an die gleiche Not-Stromversorgung angeschlossen, wie die erste Lichtquelle oder Lichtquellen 7. Diese eigene Not-Stromversorgung mit dem eingebauten Akkumulator 19 tritt automatisch in Funktion, wenn das normale Versorgungsnetz außer Funktion tritt, so dass auch die Einschaltung der zweiten Lichtquelle 51 im eintretenden Sicherheitsfall gleichzeitig erfolgt.

Beim Ausführungsbeispiel gemäß Fig. 1 bis 4 ist die Ausnehmung 52 in der Rastfeder 37 angeordnet, z.B. in deren Federsteg 37d.

Beim Ausführungsbeispiel gemäß Fig. 5 bis 8, bei dem nur eine Gehäuseabdeckung 3a bzw. 3b vorgesehen ist, ist die zweite Lichtquelle 51 in oder hinter einer Ausnehmung 52 in der Wand des Rahmenabschnitts 5c angeordnet.

Im Rahmen der Erfindung kann die zweite Lichtquelle 51 auch an einer anderen Seite im unteren Bereich des Gehäuses 3 bzw. wenigstens einer Gehäuseabdeckung 3a bzw. 3b angeordnet sein und nach unten abstrahlen.

Der Akkumulator 19 ist vorzugsweise durch eine Befestigungsvorrichtung 19a am Geräteträger 15b befestigt, insbesondere durch eine Schnellverbindungsvorrichtung, die ein schnelles und handhabungsfreundliches Befestigen und Lösen ermöglicht. Die Befestigungsvorrichtung 19a kann z. B. eine Bandage 19b zum Umbinden und Befestigen des Akkumulators 19 aufweisen.

Auch das Betriebsgerät 21 ist vorzugsweise durch eine Befestigungsvorrichtung 21a am Geräteträger lösbar befestigt. Diese kann z. B. ein Schraubenloch 21b im Randstreifen 15c aufweisen, das der Befestigung des Betriebsgerätes 21 durch Verschrauben mit einer nicht dargestellten Schraube dient, die z. b. einen Fußwinkel 21c des Betriebsgeräts 21 von außen oder innen durchfasst.

Die Befestigungsvorrichtungen 19a, 21a ermöglichen es, die zugehörigen Geräteteile am Geräteträger 15 durch Vorfertigen zu befestigen und dadurch den Geräteträger 15 mit den Geräteteilen vorzufertigen und als Baueinheit bereitzustellen. Die betreffenden Geräteteile können jedoch auch bei der Montage der Leuchte 1 an der Baustelle montiert werden.

## Patentansprüche

1. Leuchte (1) mit
• einem schmal ausgebildeten Gehäuse (3), welches an wenigstens einer Breitseite eine breitseitige Lichtabstrahlfläche (2) aufweist,
• einem Lichtleiter (6) in Form einer Scheibe mit einer der Lichtabstrahlfläche (2) entsprechenden vorderseitigen Lichtleiterabstrahlfläche (2a),
• und einer ersten Lichtquelle (7), welche dem Lichtleiter (6) schmalseitig gegenüberliegend angeordnet ist, wobei die Lichtquelle (7) das Licht schmalseitig in den Lichtleiter (6) einstrahlt und dieser das Licht breitseitig abstrahlt,
wobei das Gehäuse (3) eine schalenförmige seitliche Gehäuseabdeckung (3a, 3b) aufweist und die Leuchte (1) ferner einen Basisträger (15) aufweist, der lösbar mit der Gehäuseabdeckung (3a, 3b) verbunden ist und eine rückseitige Abdeckung bildet, und wobei die Leuchte (1) in ihrem unteren Bereich eine zweite Lichtquelle (51) aufweist, die für eine nach unten gerichtete zur Beleuchtung geeignete Lichtabstrahlung eingerichtet ist, wobei
die Leuchte (1) weiterhin eine Kontrolllampe (45) zur Anzeige eines gewünschten Betriebszustands aufweist, **dadurch gekennzeichnet, dass** die Kontrolllampe (45) in der Leuchte (1) im unteren Bereich des Basisträgers (15) oder am unteren Randbereich der Gehäuseabdeckung (3a, 3b) derart rückseitig von dem Lichtleiter (6) angeordnet ist, dass ihr Licht durch die Abstrahlfläche (2) von außen sichtbar ist.

2. Leuchte nach Anspruch 1,
**dadurch gekennzeichnet,**
**dass** die zweite Lichtquelle (51) an der Unterseite der Leuchte (1) oder dem Gehäuse (3) der Leuchte (1) oder an der seitlichen Gehäuseabdeckung (3a, 3b) angeordnet ist.

3. Leuchte nach Anspruch 1 oder 2,
**dadurch gekennzeichnet,**
**dass** die zweite Lichtquelle (51) durch eine oder mehrere lichtemittierende Halbleiterelemente, z.B. eine oder mehrere Leuchtdioden (7a), gebildet ist.

4. Leuchte nach einem der vorherigen Ansprüche,
**dadurch gekennzeichnet,**
**dass** die erste und/oder die zweite Lichtquelle (7; 51) an einem streifenförmigen Träger (7b; 51b), insbesondere an einer Leiterplatte, angeordnet ist, vorzugsweise vorgefertigt angeordnet ist.

5. Leuchte nach einem der Ansprüche 1 oder 4,
**dadurch gekennzeichnet,**
**dass** die zweite Lichtquelle (51) in einer Ausnehmung (52) einer unterseitigen Wand (5c) der Leuchte (1) angeordnet ist.

6. Leuchte nach Anspruch 5,
**dadurch gekennzeichnet,**
**dass** die zweite Lichtquelle (51) hinter einer die Ausnehmung (52) schließenden Schutzscheibe (53) angeordnet ist, die z. B. durch die Linse einer Leuchtdiode (7a) gebildet ist.

7. Leuchte nach einem der vorherigen Ansprüche 1 bis 6,
**dadurch gekennzeichnet,**
**dass** - in der Blickrichtung gegen die Lichtabstrahlfläche (2a) gesehen - die zweite Lichtquelle (51) im mittleren Bereich der Unterseite der Leuchte (1) angeordnet ist.

## Claims

1. A luminaire (1) having
• a narrowly designed housing (3), which on at least one broadside has a broadsided light emission surface (2),
• a light guide (6) in the form of a disk with a front light guide emission surface (2a) corresponding to the light emission surface (2),
• and a first light source (7), which is arranged on the narrow side opposite the light guide (6), wherein the light source (7) radiates the light on the narrow side into the light guide (6) and the latter emits the light on the broad side,
wherein the housing (3) has a shell-shaped side housing cover (3a, 3b) and the luminaire (1) furthermore has a base support (15), which is detachably connected to the housing cover (3a, 3b) and forms a rear cover,
and wherein the luminaire (1) in its lower region has a second light source (51), which is configured for a downwardly directed light emission suitable for illumination, wherein the luminaire (1) furthermore has a control lamp (45) for displaying a desired operating state, **characterized in that** the control lamp (45) is arranged in the luminaire (1) in the lower region of the base support (15) or on the lower edge region of the housing cover (3a, 3b) to the rear of the light guide (6) in such a manner that its light through the emission surface (2) is visible from the outside.

2. The luminaire according to Claim 1,
**characterized in**
**that** the first light source (51) is arranged on the underside of the luminaire (1) or the housing (3) of the luminaire (1) or on the side housing cover (3a, 3b).

3. The luminaire according to Claim 1 or 2,
**characterized in**
**that** the second light source (51) is formed by one or more light-emitting semiconductor elements, for example, one or more light-emitting diodes (7a).

4. The luminaire according to any one of the preceding claims,
**characterized in**
**that** the first and/or the second light source (7; 51) is arranged on a strip-shaped support (7b; 51b), in particular, on a circuit board, preferably is arranged prefabricated.

5. The luminaire according to any one of Claims 1 or 4,
**characterized in**
**that** the second light source (51) is arranged in a recess (52) of an underside wall (5c) of the luminaire (1).

6. The luminaire according to Claim 5,
**characterized in**
**that** the second light source (51) is arranged behind a protective disk (53), that closes the recess (52), which, for example, is formed by the lens of a light-emitting diode (7a).

7. The luminaire according to any of the preceding Claims 1 to 6,
**characterized in**
**that** - viewed in the viewing direction towards the light emission surface (2a) - the second light source (51) is arranged in the central region of the underside of the luminaire (1).

## Revendications

1. Luminaire (1) avec
• un boîtier (3) de forme étroite, qui
comprend, sur au moins un côté large, une surface d'émission de lumière du côté large (2),
• un guide de lumière (6) sous la forme d'un disque avec une surface d'émission de lumière du côté avant (2a) correspondant à la surface d'émission de lumière du côté large (2),
• et une première source de lumière (7), qui est disposée du côté étroit en face du guide de lumière (6), la source de lumière (7) projetant la lumière du côté étroit dans le guide de lumière (6) et celui-ci émettant la lumière sur le côté large,
le boîtier (3) comprenant un couvercle de boîtier latéral en forme de coque (3a, 3b) et le luminaire (1) comprenant en outre un support de base (15) qui est relié de manière amovible avec le couvercle de boîtier (3a, 3b) et qui forme un couvercle arrière et le luminaire (1) comprenant, dans sa partie inférieure, une deuxième source de lumière (51) qui est conçue pour une émission de lumière adaptée à un éclairage vers le bas, le luminaire (1) comprenant en outre une lampe de contrôle (45) pour l'affichage d'un état de fonctionnement souhaité, **caractérisé en ce que** la lampe de contrôle (45) est disposé dans le luminaire (1) dans la partie inférieure du support de base (15) ou sur le bord inférieur du couvercle de boîtier (3a, 3b), à l'arrière du guide de lumière (6) de façon à ce que sa lumière soit visible de l'extérieur à travers la surface d'émission (2).

2. Luminaire selon la revendication 1,
**caractérisé en ce que**
la deuxième source de lumière (51) est disposée sur le côté inférieur du luminaire (1) ou sur le boîtier (3) du luminaire (1) ou sur le couvercle de boîtier latéral (3a, 3b).

3. Luminaire selon la revendication 1 ou 2,
**caractérisé en ce que**
la deuxième source de lumière (51) est constituée d'un ou plusieurs éléments semi-conducteurs émetteurs de lumière, par exemple d'une ou plusieurs diodes (7a).

4. Luminaire selon l'une des revendications précédentes,
**caractérisé en ce que**
la première et/ou la deuxième source de lumière (7 ; 51) est disposée sur un support en forme de bande (7b ; 51b), plus particulièrement sur un circuit imprimé, de préférence de manière préfabriquée.

5. Luminaire selon l'une des revendications 1 à 4,
**caractérisé en ce que**
la deuxième source de lumière (51) est disposée dans un évidement (52) d'une paroi du côté inférieur (5c) du luminaire (1).

6. Luminaire selon la revendication 5,
**caractérisé en ce que**
la deuxième source de lumière (51) est disposée derrière un disque de protection (53) fermant l'évidement (52), qui est constitué par exemple de la lentille d'une diode électroluminescente (7a).

7. Luminaire selon l'une des revendications 1 à 6,
**caractérisé en ce que**
vu dans la direction opposée à la surface d'émission de lumière (2a), la deuxième source de lumière (51) est disposée dans la partie centrale du côté inférieur du luminaire (1).
